# EUROPEAN PATENT SPECIFICATION

(11) **EP 1 999 465 B1**
(45) Date of publication and mention of the grant of the patent: **16.11.2016**
(21) Application number: 07758780.6
(22) Date of filing: 19.03.2007
(51) Int. Cl.: G01N 30/60

(54) **CERAMIC-BASED CHROMATOGRAPHY APPARATUS**
CHROMATOGRAPHIEVORRICHTUNG AUF KERAMIKBASIS
APPAREIL DE CHROMATOGRAPHIE À BASE DE CÉRAMIQUE

(30) Priority: 24.03.2006 US 785866 P
(43) Date of publication of application: 10.12.2008
(73) Proprietor: Waters Technologies Corporation, Milford, MA 01757 (US)
(72) Inventor: GERHARDT, Geoff, C., Millbury, MA 01527 (US); MICHIENZI, Joseph, Plainville, MA 02762 (US); BENEVIDES, Christopher, C., Tiverton, MA 02878 (US)
(74) Representative: Vossius, Corinna
(86) International application number: PCT/US2007/064267
(87) International publication number: WO 2007/112224

(56) References cited:
- US-A- 5 540 834
- US-A1- 2004 089 607
- US-A1- 2005 045 559
- US-B2- 6 929 030
- US-B2- 6 987 263
- OBERACHER H ET AL: "Preparation and evaluation of packed capillary columns for the separation of nucleic acids by ion-pair reversed-phase high-performance liquid chromatography", JOURNAL OF CHROMATOGRAPHY, ELSEVIER SCIENCE PUBLISHERS B.V, NL, vol. 893, no. 1, 29 September 2000 (2000-09-29), pages 23-35, XP004210371, ISSN: 0021-9673, DOI: 10.1016/S0021-9673(00)00731-7

## Description

### TECHNICAL FIELD

The invention generally relates to tubing used in analytical instruments and other systems.

### BACKGROUND INFORMATION

Since its inception in the 1970's, traditional HPLC (high-performance liquid chromatography) has typically utilized analytical columns constructed from stainless-steel tubing having an inner bore diameter of 4.7mm and lengths in a range of about 5 cm to about 25 cm. The selection and continuing use of a 4.7 mm diameter tube is perhaps related to the original availability of steel tubing of various sizes.

To complete an analytical column for an HPLC instrument, a fritted end-fitting is typically attached to a piece of tubing, and the tube is then packed with particles (typically silica-based, functionalized with a variety of functional moieties.)

To achieve optimal separation efficiency, using the completed column, an appropriate flow rate of a mobile phase is important. For a 4.7 mm diameter column packed with 5 µm diameter particles, a desirable flow rate is typically between about 1 mL/min and about 2 mL/min. To maintain separation efficiency, it is also desirable to minimize the presence of unswept dead volume in the plumbing of the HPLC instrument.

In an HPLC instrument, an injector is typically used to inject a sample into a flowing mobile phase as a discrete fluidic plug. Dispersion of a plug band as it travels to and/or from the column reduces the ultimate efficiency of the chromatographic system. For example, in a chromatographic system using 4.7 mm column tubing and a mobile phase flowing at 1-2 mL/min, tubing having an outer diameter of 1/16 inch and an inner diameter of about 0.010 inch is typically used to plumb connections between the various HPLC components (e.g. pump, injector, column, and detector.) For these flow rates and tubing dimensions, it is relatively easy to machine port details to tolerances that will ensure minimal band broadening at tubing interfaces.

A desire to reduce mobile-phase solvent consumption, in part, has motivated a trend towards reducing column inner diameter. Thus, several scales of chromatography are now commonly practiced; these are typically defined as shown in Table 1 (where ID is inner diameter.)

**Table 1**

| **HPLC Scale** | **Column ID** | **Typical Flow range** |
|---|---|---|
| Analytical | 4.7 mm | 1's mL/min |
| Microbore | 1-2 mm | 100's µL/min |
| Capillary | 300-500 µm | 10's µL/min |
| Nano | 50-150 µm | 100's nL/min |

Microbore HPLC has often been practiced with equipment similar to that used for analytical scale HPLC, with minor modifications. Aside from requiring the exercise of a small degree of additional care in making fittings, microbore HPLC typically requires an operating skill level similar to that of analytical scale HPLC.

In contrast, Capillary and nano-scale HPLC require relatively significant changes in HPLC components relative to analytical-scale HPLC. Generation of stable mobile-phase flows of less than about 50 µL/min is relatively difficult using standard open-loop reciprocating HPLC pumps, such as those commonly found in analytical and microbore HPLC systems.

For capillary-scale chromatography, stainless-steel tubing is usable for component interconnections, however the inner diameter must typically be less than 0.005 inch (less than about 125 µm.) Care is generally required in the manufacture of fitting terminations to avoid creation of even minute amounts of dead volume.

For nano-scale chromatography, tubing having inner diameters of about 25-50 µm is typically required to interconnect components of an instrument (e.g., to connect a pump to a separation column.) Because stainless-steel tubing is typically unavailable in these dimensions, polyimide-coated fused-silica tubing is typically used. While fused-silica tubing has excellent dimensional tolerances and very clean, non-reactive interior walls, it is fragile and can be difficult to work with. In addition, interconnection ports should be machined to exacting tolerances to prevent even nanoliters of unswept dead volume.

While the primary driver to replace analytical-scale HPLC with microbore-scale HPLC can be a desire for reduced solvent consumption, moving to capillary-scale and nano-scale chromatography, in addition to further reducing solvent consumption, can support improved detection sensitivity for mass spectrometers when, for example, flows of less than about 10 µL/min are used. Moveover, capillary-scale or nano-scale systems are often the only options for the sensitive detection typically required for applications involving small amounts of available sample (e.g., neonatal blood screening.)

In spite of the advantages of capillary-scale and nano-scale chromatography, HPLC users tend to employ microbore-scale and analytical-scale chromatography systems. As described above, these systems typically provide good reliability and relative ease-of-use. In contrast, maintenance of good chromatographic efficiency while operating a capillary-scale or nano-scale chromatographic system requires significant care when plumbing the system (e.g., using tubing to connect pump, injector, column and detector.)

In practice, an operator switching from an analytical/microbore-scale system to a capillary/nano-scale system at times finds that better separation efficiency was achieved with the higher-flow rate (i.e., analytical/microbore-scale) system. This typically occurs due to insufficiency in the operator's knowledge or experience required to achieve low band-spreading tubing interconnections. Moreover, use of smaller inner-diameter tubing at times leads to more frequent plugging of tubing.

Due the relative difficulty typically encountered with capillary-scale HPLC systems and, even more so, with nano-scale HPLC systems, such systems have primarily been used only when necessary, such as for small sample sizes, and when a relatively skilled operator is available. Thus, analytical laboratories tend to possess more analytical-scale and microbore-scale systems than capillary-scale and nano-scale systems, and do not realize the full benefits available from capillary-scale and nano-scale HPLC.

Oberacher et al: "Preparation and evaluation of packed capillary columns for the separation of nucleic acids by ion-pair reversed-phase high-performance liquid chromatography", JOURNAL OF CHROMATOGRAPHY, ELSEVIER SCIENCE PUBLISHERS B.V, NL, vol. 893, no. 1, 29 September 2000 (2000-09-29), pages 23-35, discloses the use of 200µm ID capillary columns packed with micropellicular, octadecylated, 2,1µm poly(styrene-divinylbenzene) particles for separating oligonucleotides and double stranded DNA fragments by ion-pair reversed phase high-performance liquid chromatography. Three different type of frites (sintered silicon particles, sintered octadecylsilica particles, and monolithic poly(styrene-divinylbenzene)(PS-DVB)) frits where used and evaluated with respect to their influence on chromatography. The disclosed HPLC system consists of a computer controlled low-pressure gradient micro pump, a vacuum degasser, a particular column thermostat, a microinjector with a 20 ml or 500 ml internal sample loop, a variable wavelength detector, and a personal computer. The detection cells combined with UV detectors are laboratory prepared capillary bubble cells.

US patent application No. 2004/0089607 A1 to Hobbs et al, published on May 13, 2004, discloses systems and methods for performing multiple parallel chromatographic separations. Microfluidic cartridges containing multiple separation columns are used to perform multiple separations in a limited space by a single instrument containing high-pressure pumps and analyte detectors. Pressure fit interfaces are used for allowing the microfluidic cartridges to easily be removed and replaced within the instrument, either manually or robotically.

US patent No. 5,540,834 to Carr et al, published on July 30, 1996, discloses methods for the preparation of porous inorganic particles. The methods involve combining an aqueous sol containing a colloidal dispersion of inorganic particles with a polymerizable organic material, polymerizing this material, and thereby forming aggregates of colloidal particles and polymer. The polymerizable organic material polymerizes and adsorbs onto the colloids, entrains the colloids in the precipitation of the polymer and thus allows the colloids to aggregate.

### SUMMARY OF THE INVENTION

The invention arises, in part, from a realization that an integrated high-pressure chemical-separation device, such as an HPLC instrument, is advantageously fabricated, in part, from sintered inorganic particles. Conveniently, in exemplary embodiments of the invention, an HPLC instrument is fabricated, with various degrees of integration, from laminated co-fired ceramic-based tape. Embodiments of the invention provide any or all of the following advantages: reduced numbers of valves and/or reduced length and/or numbers of sections of interconnect tubing, easier fabrication, low-cost fabrication, easier operation of capillary-scale and nano-scale LC, reduced dead-volume, reduced size, disposable devices, integrated devices, and high-pressure liquid chromatography in a ceramic-based device. For example, embodiments of the invention provide nano-scale microfluidic HPLC instruments that offer similar ease-of-use and reliable operation to that of prior analytical-scale or microbore-scale instruments.

Embodiments of the invention provide advantages over prior microfluidic devices that entail low-pressure operation for, for example, electrophoretic separation or flow-injection analysis. Some of these prior microfluidic devices provide relatively low-pressure operation in microfluidic platforms constructed from glass, silicon, or synthetic polymers. Construction of such low- or no-pressure microfluidic devices typically requires relatively simple interfaces to load samples and run analyses.

In contrast, embodiments of the invention entail HPLC realized on a microfluidic substrate. These embodiments provide microfluidic-based HPLC systems capable of operation under hydraulic pressures in excess of about 6894 kPa (1000 psi), and as high as about 103421 kPa (15,000 psi), or higher.

Embodiments of the invention provide advantages over prior systems in which a separation column is a consumable. A microfluidic-based high-pressure column, according to these embodiments, employ one or more no-fitting interfaces to ensure that low dead-volume is preserved at such interfaces when a user replaces a column.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.

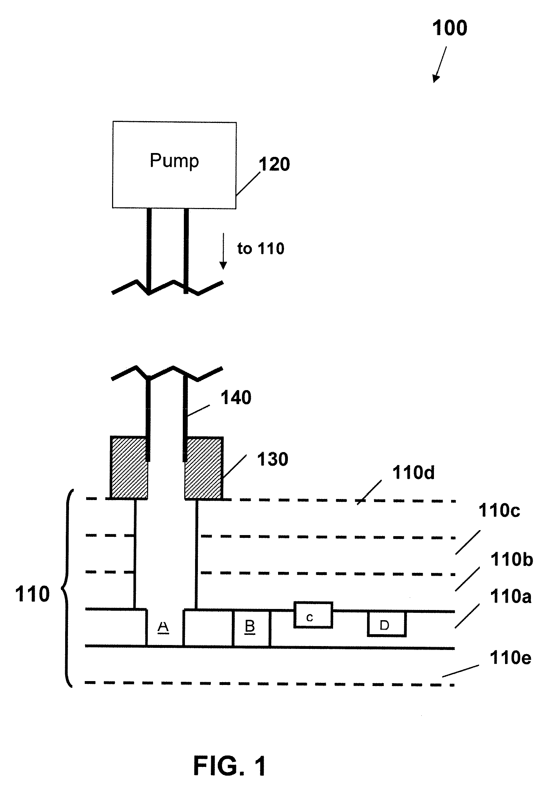

**FIG. 1** is a flow diagram of a method for fabricating analytical-instrument tubing, in accordance with the invention;
**FIG. 1** is a cross-sectional diagram of a portion of a chemical-processing device, in accordance with the invention;
**FIG. 2A** is a side-view diagram of a portion of an instrument, in accordance with the invention;
**FIG. 2B** is a cross-sectional diagram of a portion of an instrument, in accordance with the invention;
**FIG. 3A** is a calculational mesh map of one corner of a conduit model;
**FIG. 3B** is a graph of maximum sustainable pressure, in accordance with one illustrative model;
**FIG. 3C** is a graph of maximum sustainable pressure versus width of a conduit, in accordance with one illustrative model;
**FIG. 3D** is a graph of maximum sustainable pressure versus number of layers, in accordance with one illustrative model;
**FIG. 4** is a top-view diagram of chemical-processing unit which forms not part of the present invention;
**FIG. 5A** is a block diagram of a top view of a portion of a ceramic-based device at an intermediate stage of fabrication which forms not part of the present invention;
**FIG. 5B** is a block diagram of a top view of a portion of a ceramic-based device which forms not part of the present invention;
**FIG. 5C** is a block diagram of a side view of a portion of a ceramic-based device at an intermediate stage of fabrication which forms not part of the present invention;
**FIG. 6A** is a block diagram of a side view of a portion a ceramic-based device that incorporates an electrospray interface which forms not part of the present invention;
**FIG. 6B** is a block diagram of a side view of a portion a ceramic-based device that includes a processing-unit, an electrospray interface which forms not part of the present invention;
**FIG. 7** is a block diagram of a side view of a portion of a ceramic-based device which forms not part of the present invention;
**FIG. 8** is a top view of a diagram of a portion of a ceramic-based chromatographic device which forms not part of the present invention;
**FIG. 9** is a top view of a diagram of a portion of a ceramic-based device which forms not part of the present invention;
**FIG. 10** is a graph of temperature of a fluid in a conduit as a function of position in the conduit, in accordance with one illustrative example;
**FIG. 11** is a cross-sectional diagram of an EK pump formed in a ceramic substrate which forms not part of the present invention;
**FIG. 12** is a cross-sectional end-view diagram of an EK ceramic-based pumping apparatus that utilizes a gas-free isolated electrode system and which forms not part of the present invention;
**FIG. 13A** is a top view block diagram of a ceramic-based EK pumping flow source which forms not part of the present invention;
**FIG. 13B** is a top view block diagram of a ceramic-based EK pumping flow source which forms not part of the present invention;
**FIG. 14A** is a top view block diagram of a ceramic-based liquid-processing apparatus which forms not part of the present invention;
**FIG. 14B** is a top view block diagram of a ceramic-based liquid-processing apparatus which forms not part of the present invention;
**FIG. 14C** is a top view block diagram of a ceramic-based liquid-processing apparatus which forms not part of the present invention;
**FIG. 15A** is a three-dimensional view of a ceramic-based device, illustrating microfluidic components associated with a patterned layer of a substrate which forms not part of the present invention;
**FIG. 15B** is a three-dimensional view of the ceramic-based device of FIG. 15A, illustrating electronic components associated with a surface of the substrate;
**FIG. 16A** is a side view block diagram of a portion of a valve portion of a ceramic-based microfluidic system which forms not part of the present invention; and
**FIG. 16B** is a top view block diagram of the portion of the valve portion of FIG. 16A.

### DESCRIPTION

Embodiments of the invention, some illustrative examples of which are described below, include components formed in part from ceramic particulate materials or entail methods for making devices that are fabricated, at least in part, from such materials. Prior to describing these examples in more detail, some features of fabrication methods generally applicable to numerous embodiments of the invention are described next.

Conveniently, embodiments utilize unfired material in a tape form (herein referred to occasionally as "green sheet" or "green-sheet tape") for fabrication of a device. Green-sheet material permits relatively easy, low-cost fabrication of a microfluidic device that supports operation at relatively high pressures, in cooperation with other components, according to some principles of the invention.

Green sheet includes particulate materials in a convenient form for handling and configuring prior to sintering. Green sheet typically includes ceramic particles dispersed in an organic binder. During sintering, the organic binder burns off while the ceramic particles form direct and/or indirect bonds to one another. Two or more sheets of green-sheet tape can be laminated with or without intermediate layers of adhesive. After sintering, a unitary device body is obtained.

The following detailed description of particular green-sheet materials and fabrication steps is intended to be illustrative and not comprehensive. Accordingly, this description should be understood as not limiting fabrication methods of the invention to any particular set of steps or particular materials.

Particle-containing tape includes, for example, ceramic particles cast in an organic binder. In their unfired state, these tapes are flexible and easily machined or otherwise patterned and configured. In various embodiments of the invention, holes, vias, channels, and/or other microfludic features are defined by, for example, machine or laser removal, and/or embossing one or more portions of tape, and/or disposing a fugitive material between tape layers.

One or more layers are stacked, laminated and fired, creating a relatively homogenous rigid substrate having internal microfluidic features. In some embodiments, tape is "co-fired" in the sense that metal conductors and/or other features are printed or otherwise disposed with the tape and co-fired with the tape to include additional components with microfluidic conduits.

Suitable green-sheet material includes composites that include inorganic particles of glass-ceramic, ceramic, or mixtures thereof, dispersed in a polymer binder, and also optionally include additives such as plasticizers and dispersants. Ceramic particles are any suitable ceramic particles, including known particles, such as aluminum oxide or zirconium oxide.

Such devices are fabricated, in some embodiments, from low-temperature and/or high-temperature co-fired ceramics (LTCC, HTCC). Embodiments that include LTCC materials, for example, utilize any suitable LTCC material, including commercially available materials, such as DUPONT™ 951 GREEN TAPE™ low temperature co-fire dielectric tape (available from DuPont Electronic Materials, Research Triangle Park, NC, in thicknesses from about 50 µm to about 250 µm.) Such LTCC material sinters at about 850°C. The relatively low-temperature of sintering permits the use of highly conductive precious-metal thick-film conductors of, for example, gold, silver or their alloys in embodiments that include integrated electrical interconnect.

After lamination and firing, green-sheet material forms a substantially monolithic structure. For some electronic applications, electronic-device processing methods using commercially available ceramic green-sheet material are known to those having ordinary skill in the electronic device arts.

One device fabrication method which forms not part of the present invention, utilizes sheets of any suitable thickness, such as commercially available thicknesses of between about 50 µm and about 250 µm. The sheets are cut to a desired size, and one or more green-sheet layers is optionally textured using various techniques to form desired structures, such as vias, channels, or cavities, in the finished multilayered structure.

As mentioned, any suitable technique, including known techniques, are used to texture a green-sheet layer. For example, portions of a green-sheet layer may be punched out to form vias or channels. This operation may be accomplished using any suitable punch, such as a conventional multilayer ceramic punch. Alternatively, features are defined by embossing them into the surface of one or more green sheets using, for example, an embossing plate. Alternatively, texturing is accomplished via etching to remove portions of one or more sheets, such as with a laser tool.

In addition to embossing or removing material to define microfluidic features, a variety of materials are optionally applied to the sheets, for example, in the form of thick-film pastes. These materials provide any of numerous optional features such as: electrical interconnect, resistors, piezoelectric components, and conduits (via use of porous materials and/or fugitive materials that escape during sintering.)

Thick-film pastes typically include a desired material, which may be a metal and/or a dielectric, in the form of a powder dispersed in an organic vehicle, and the pastes are designed to have the viscosity appropriate for the desired deposition technique, such as screen-printing. The organic vehicle includes, for example, resins, solvents, surfactants, and flow-control agents. The thick-film paste also includes, for example, a flux, such as a glass frit, to facilitate sintering. Thick-film technology, as applied to electronic applications, is known to those having ordinary skill in the electronic-device packaging arts.

Porosity of a fired thick-film material is adjusted by, for example, varying an amount of organic material. Similarly, a porosity of a green-sheet layer is optionally varied by changing a proportion of organic binder. Alternatively, porosity is increased by dispersing within an organic vehicle, or an organic binder, another organic phase, such as polymer microspheres, that is not soluble in the organic vehicle.

Electrical interconnect is formed from, for example, thick-film pastes that include metal particles of silver, platinum, palladium, gold, copper, tungsten, nickel, tin, or alloys thereof. Examples of suitable silver pastes are silver conductor composition numbers 7025 and 7713 sold by E. I. Du Pont de Nemours and Company.

In some embodiments, after texturing and deposition of materials, two or more sheets are laminated, with or without intermediate layers of adhesive, such as a room-temperature pressure-sensitive adhesive. Adhesive is applied by any suitable technique, such as conventional coating techniques.

Layers are stacked together to form a multilayered green-sheet structure. Alignment holes are optionally included in the layers to facilitate the stacking process.

The lamination process optionally involves the application of pressure to the stacked layers. For example, a uniaxial pressure of about 6894 to 10342 kPa (1000 to 1500 psi) is applied to the stacked green-sheet layers, followed by application of an isostatic pressure of about 20684 to 34473 kPa (3000 to 5000 psi) for about 10 to 15 minutes at an elevated temperature, such as 70°C.

In some embodiments, pressures of less than 17236 kPa (2500 psi) minimize changes in dimensions of defined microfluidic structures. In some embodiments, pressures that are still lower allow formation of larger conduits and other cavities. Some embodiments limit maximum pressures to less than about 6894 kPa (1000 psi) or less than about 2068 kPa (300 psi) or less than about 689 kPa (100 psi). Some embodiments, described in more detail below, utilize pressure to provide a desired shape for a conduit.

Firing of the stacked assembly converts the laminated multilayered green-sheet structure from a green state to a sintered state, forming a substantially monolithic multilayered structure. A two-stage process is used, in some cases. In the first stage, binder and/or other organic materials are burned out in a temperature range of, for example, about 250 to 500°C.

In the second stage, sintering of inorganic particles occurs. A sintering temperature is selected in response to a composition of the green sheet. For many types of ceramics, appropriate sintering temperatures range from about 950°C to about 1600°C. For example, for green-sheet containing aluminum oxide, sintering temperatures between 1400°C and 1600°C are often suitable. Other ceramic materials, such as silicon nitride, aluminum nitride, and silicon carbide, may require higher sintering temperatures, such as about 1700°C to about 2200°C.

Inclusion of glassy particles at times provides a lower sintering temperature. For example, if a green sheet includes glassy particles, a sintering temperature in a range of 750°C to 950°C is available. Common glassy particles generally provide sintering temperatures in a range of about 350°C to 700°C. Finally, metal particles may require sintering temperatures in a range of 550°C to 1700°C, depending on the metal.

A laminate is fired for any suitable length of time, such as about 4 hours to about 12 hours or more, depending on the material used. A firing process, in some cases, is selected to provide sufficient temperature and duration to decompose polymers and allow for their removal. Before or after firing, the layered sheets may be diced to obtain multiple devices from a single laminated assembly.

As known to one having ordinary skill in the electronic-device packaging arts, sintered green-sheet laminates from commercially available material tend to shrink during burnout by about 0.5 to 1.5% in volume, and tend to shrink during sintering by about 14 to 17% in volume. In some embodiments added materials, such as pastes, are selected to provide compatible processing temperatures and amounts of shrinkage between the different materials present in an unfired stack. Symmetrical disposition of added features is also used in some cases to reduce internal stresses arising from mismatched shrinkage of different materials.

As mentioned above, various embodiments include features that support high-pressure operation. Suitable materials are selected to support a desired pressure level. For example, some commercially available LTCC materials are composed of alumina and glass, while some commercially available HTCC materials are composed mainly of alumina. The latter, depending on processing, have a fracture strength about 1.5 to 2 times greater than the former. Because support for hydraulic pressure increases with fracture strength, increasing approximately linearly with the fracture strength of an underlying sintered material, HTCC materials, as a generality, will provide higher pressure capability (other features being similar) than LTCC materials.

Some embodiments of the invention utilize less common HTCC materials that provide relatively higher fracture strength than the more common HTCC materials, to support higher fluidic pressures. One such class of materials is, for example, the yttria-stabilized zirconia-based class of materials.

While the above-described HTCC materials, in some embodiments, support pressures up to about 68947 kPa (10,000 psi), or more, some zirconia-based materials provide a fracture strength of about 3 time the fracture strength of typical LTCC material (as much as about 2 times the fracture strength of some common HTCC materials.) Hence, some embodiments utilizing this material support pressures of up to about 137895 kPa (20,000 psi) or more. Such material is commercially available from, for example, ESL Electro-Science, King of Prussia, PA as product number 42000 yttria-stabilized HTCC tape.

The word "sintering" as used herein refers to elevated-temperature processing of a collection of particles that causes the particles to directly or indirectly bond to one another. The formation of indirect or direct bonds entail, in some cases, diffusive and/or melting processes. For example, in some cases, particles having direct contact form direct bonds as a consequence of diffusion of the particles constituent elements. In some cases, after sintering, particles have indirect contact via an intermediate phase.

The particles are formed from, for example, glassy or crystalline materials, for example, crystalline ceramic materials. An intermediate phase includes, for example, a glassy material. Additional materials at times are included with a collection of particles prior to sintering. For example, additional materials include ceramic particles, glassy particles, metallic particles, and/or organic materials, such as binder materials.

As was described above, many of the ease-of-use and reliability issues in a nano-scale HPLC system arise from the difficulty in making low dead-volume interconnections. A microfluidic-based HPLC system has the potential of avoiding many of these issues. At least some HPLC components are constructed as microfluidic elements, and desirable interconnections are made between these elements via suitable microfluidic channels.

Some illustrative embodiments of the invention are described in more detail in the following. In view of this description, other embodiments and components will be apparent to one having ordinary skill in the compound-analysis arts.

Some basic structural features of some embodiments of the invention are described next, with reference to **FIG. 1**.

**FIG. 1** is a cross-sectional diagram of a portion of a chemical-processing device **100**, according to one embodiment of the invention. The device **100** includes a processing unit **110**, a high-pressure pump **120**, a tube **140** receiving a fluid from the high-pressure pump **120**, and a high-pressure connector **130** that attaches the conduit **140** to the processing unit **110**.

The processing unit **110** is formed at least in part of sintered inorganic particles, and defines a separation column in fluidic communication with an inlet port of the processing unit **110**. In a preferred embodiment, the pump **120** is configured to deliver a liquid including a solvent at a pressure at least sufficient for high-performance liquid chromatography. The high-pressure connector **130** is in physical communication with the inlet port to provide a substantially leak-free connection for the conduit **140** receiving the liquid delivered by the high-pressure pump **120**. The device **100** optionally includes additionally components such as pump(s), conduit(s), column(s), electrical component(s), computer(s), etc., as will be recognized by one having ordinary skill in the chemical-processing arts.

The processing unit **110** includes a first layer **110a** and optionally includes one or more additional layers **110b**, **110c**, **110d**, **110e**. One or more, preferably all, of the layers **110b**, **110c**, **110d**, **110e** of the processing unit **110** are preferably derived from ceramic-based green-sheet tape and assembled to form the processing unit **110** in a manner described.

The separation column and other conduits defined by the processing unit **110** optionally extend fully or partially through the thickness of one or more of the layers **110b**, **110c**, **110d**, **110e**, as illustrated in **FIG. 1** at reference indicia **A**, **B**, **C**, and **D** (viewed end-on.) Optionally, as described in the above-description of green-sheet processing, the conduits **A**, **B**, **C**, **D** are defined in unfired material by removing portions of one or more of the layers **110b**, **110c**, **110d**, **110e**, by embossing one or more of the layers **110b**, **110c**, **110d**, **110e**, or by depositing a fugitive material between any two layers **110b**, **110c**, **110d**, **110e**. As illustrated, one of the conduits **A** is fluidically connected, by the high-pressure connector **130**, to the tube **140**.

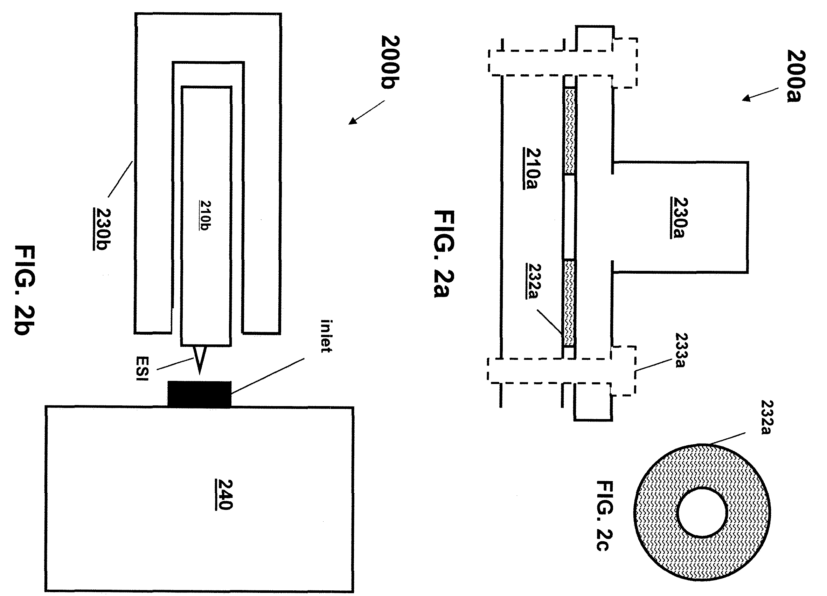

The separation column has any suitable width, preferably less than about 500 µm. For higher-pressure operation, the width is preferably less than about 200 µm. The high-pressure pump **120** and the high-pressure connector **130** are configured for substantially leak-free operation at a pressure greater than about 6894 kPa (1 kspi), or greater than about 13789 kPa (2 kpsi), or greater than about 34473 kPa (5 kpsi), or greater than about 68947 kPa (10 kpsi), or greater than about 103421 kPa (15 kpsi), or greater than about 137895 kPa (20 kpsi). In particular, some preferred embodiments of the invention are capillary and nano-scale HPLC systems that provide advantageous fluidic connections in comparison with some prior high-pressure systems. Some embodiments of suitable connectors that support high-pressure operation are described in more detail with reference to **FIGS. 2a** and **2b**.

**FIG. 2a** is a side-view diagram of a portion of an instrument **200a**. The instrument **200a** includes a processing unit **210a**, similar to the unit **110**, and a connector **230a** that optionally is used as the connector **130** of the instrument **100**.

The connector **230a** includes a housing **231a** that is permanently or removably attached directly or indirectly to the processing unit **210a**. For example, to attach the housing unit **231a**, the connector **230a** optionally includes a sealing unit **232a** and/or attachments **233a**, which also support a high-pressure substantially leak-tight seal between the housing **231a** and the processing unit **210a**.

The sealing unit **232a** includes, for example, an adhesive and/or a gasket. A gasket is formed from any suitable material(s), including known material(s), such as polymide, polyetheretherketone, tetrafluoroethylene, and polydimethylsiloxane, and optionally has, for example, a coating of adhesive to attach the gasket to the processing unit **210a**.

A gasket has any suitable shape, such as round, polygonal, or irregular. In one alternative (illustrated in top-view diagram of **FIG. 2c**), a gasket **232c** has a donut shape.

A gasket optionally has an area of less than about 0.05 square inch. A gasket has a gasket factor of at least about 1:1 or, for example, at least about 1.5:1 for better reliability.

The attachments **233a** include any suitable mechanical component(s) for attaching the housing **231a** to the processing unit **210a**. As illustrated, the attachments **233a** optionally include bolt assemblies disposed in through holes defined in the processing unit **210a**. The bolt assemblies are adjusted to apply a sufficient pressure, for a selected operating pressure, to provide a substantially leak-free interface between the housing **231 a** and the processing unit **210a**.

The housing **231a** has a suitable configuration, optionally including known configurations, for connecting to a tube. For example, the housing **231a** optionally includes features similar to known HPLC connectors. For example, in one implementation, the housing **231a** includes two threaded metallic components and a polymer ferrule, which, as will be understood by one having ordinary skill in the chromatography arts, serve to provide a fluid-tight connection to a conduit.

**FIG. 2b** is a cross-sectional diagram of a portion of an instrument **200b**. The instrument **200b** includes a processing unit **210b**, for example, similar to the unit **110**, and a fixture **230b**. The instrument **200b** optionally includes an analytical module **240**, such as a mass-spectrometry unit, that provides further analysis of compounds outputted by the processing unit **210b**.

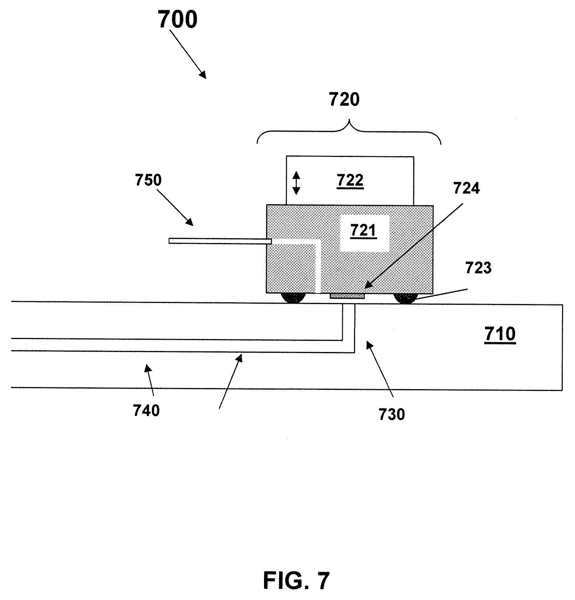

In alternative implementations, the fixture **230b** acts as a support unit that, in part, positions the processing unit **210b** adjacent to an inlet port of a mass spectrometer. In this implementation, the processing unit **210b** optionally includes, for example, an electrospray interface (ESI) that directs separated material into the inlet port of the mass spectrometer. The ESI has any suitable configuration, which optionally includes features of configurations known to one having ordinary skill in the mass-spectrometry arts. Further details regarding embodiments of ESI's are described with reference to **FIGS. 7a** and **7b** which form not part of the present invention.

The fixture **230b**, in some alternative implementations, includes one or more hinges and/or one or more springs to facilitate disposition and exchange of processing units **210b**. The fixture **230b** optionally includes components that interface with the processing unit **210b** to provide, for example, fluidic and/or electrical connections to the processing unit **210b**.

For example, in one alternative, the fixture **230b** provides a fluidic connection to an inlet port of the processing unit **210b** in a manner, for example, similar to the connector **230a**.

In view of the above description, other configurations for the fixture **230b** will be apparent to one having ordinary skill. For example, alternative fixtures support two or more processing units, and some instruments include two or more fixtures that support two or more processing units.

As indicated above, embodiments of the invention entail microfluidic ceramic-based instruments that support relatively high fluidic-pressures. In embodiments of the invention, a separation column and/or other conduits are configured to sustain selected operating pressures, such as those required to perform HPLC. Column-configuration features of interest include, for example, dimensions and/or shapes that provide greater resistance to fracture failure under pressure loading or repeated pressure loading.

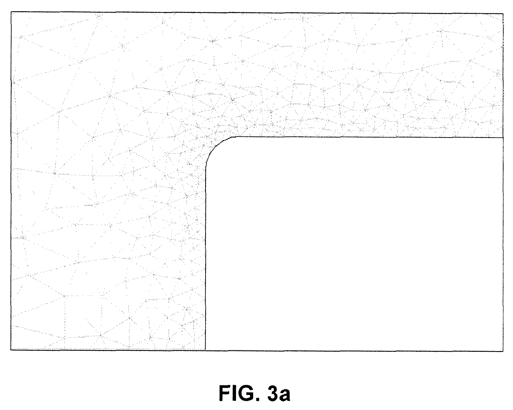

Conduit configurations, such as height, width, aspect ratio, and/or radius of curvature are selected, for example, via empirical and/or theoretical considerations. For example, with reference to **FIGS. 3a** through **3d**, stresses in a device are estimated via model calculations to illustrate selection of some exemplary configurations. These calculations should be understood as merely being illustrative and not limiting in the selection of configurations nor an indication of any particular level of accuracy or completeness of the illustrated example.

In the present example, a model LTCC-based conduit is assumed to be deformed by an internal pressure of 50 MPa (7,250 psi). A 2-dimensional finite-element calculation is utilized to illustrate the behavior of a conduit under various conditions of pressure and configuration. Plain strain is assumed. The right and left sides of a calculational domain were fixed (i.e., no deflection for zero-pressure condition.)

**FIG. 3a** illustrates a calculational mesh map of one corner of a conduit model (denser portions of the mesh correspond to regions of ceramic material having higher stress.) The map illustrates the stress concentrator effect associated with the corners of the conduit and their radii of curvature.

The hypothetical LTCC material was assumed to have isotropic elasticity with values of Young's modulus of 152 Gpa, a Poisson's ratio of 0.17, and a fracture strength of 320 MPa (corresponding approximately to properties of fired DuPont™ 951 Green Tape™ low temperature cofire dielectric tape, available from DuPont Electronic Materials, Research Triangle Park, NC.)

The model, of the present example, has three layers, each 150 µm thick, and a channel of 250 µm in width (the channel has the height of one layer, i.e., 250 µm.)

For purely illustrative purposes, a Von Mises stress-type calculation (typically applied to ductile rather than brittle materials, as in the present example) is utilized to determine a maximum value of stress, σₘₐₓ, present in the ceramic. In the example of **FIG. 3a** (i.e., pressure in the channel of 50 MPa), σₘₐₓ is approximately 282.2 MPa. The maximum deformation predicted by this calculation is less than 0.2 µm.

Assuming a linear behavior of the model ceramic materials in response to an increasing applied pressure (i.e., increasing pressure applied to the walls of the conduit), a maximum pressure, Pₘₐₓ, at which fracture occurs can be obtained. Pₘₐₓ is obtained, for example, by determining at what conduit pressure the maximum stress in the ceramic, σₘₐₓ, is equal to the fracture strength of the ceramic material, in this case 320 Mpa.

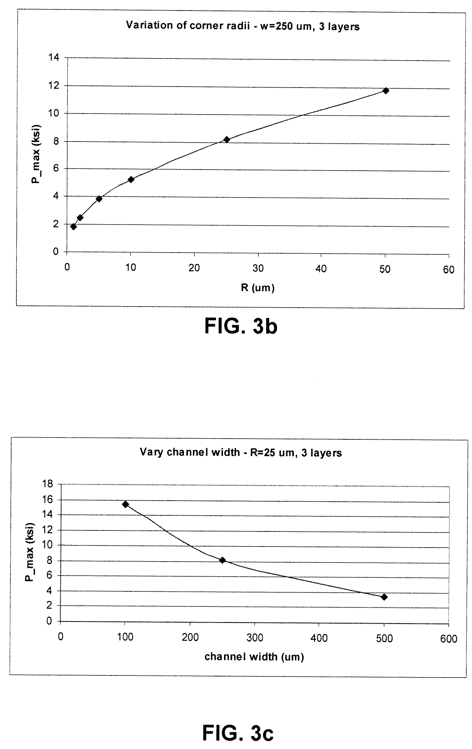

The maximum sustainable pressure, Pₘₐₓ, will generally be a factor of a radius of curvature of a conduit wall. For example, the illustrative model of **FIG. 3a** has an approximate rectangular shape with four rounded corners each having a radius of curvature of approximately 25 µm. As described below with reference to **FIG. 3b**, Pₘₐₓ for the model of **FIG. 3a** is estimated to be approximately 56537 kPa (8,200 psi).

**FIG. 3b** is a graph of maximum sustainable pressure, Pₘₐₓ, versus magnitude of a corner radius. Pₘₐₓ is approximately 13789 kPa (2,000 psi) when the corner has a radius of 1 µm. More rounded corners, i.e., having larger radii, generally provide less stress concentration and, thus, lower peak stresses for a given applied hydraulic pressure, and therefore provide higher acceptable applied pressures. For example, radii of 50 µm provide a Pₘₐₓ of approximately 82737 kPa (12,000 psi). Again, the specific values described here are intended for illustrative, qualitative purposes.

**FIG. 3c** is a graph of maximum sustainable pressure versus width of a conduit. In this example, a channel width is varied from 100 to 500 µm. All corners have a radius of 25 µm. The graph indicates that narrower channels, given the fixed height of the conduit, provide higher acceptable pressures.

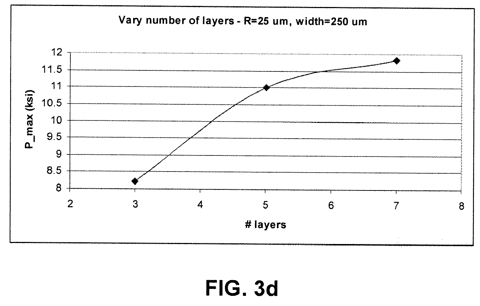

**FIG. 3d** is a graph of maximum sustainable pressure versus number of layers. That is, for this calculation, the number of layers is permitted to vary. In this example, all layers are again 150 µm thick, the channel is again 250 µm wide, and, as for **FIG. 3a**, the corner radii are 25 µm.

As illustrated by the graph, increasing the number of layers from 3 to 5 provides an increase of the maximum pressure of approximately 25%. Increasing the number of layers from 5 to 7 layers improves Pₘₐₓ by less than 10%. Thus, in this example situation, one may reasonably choose to utilize 5 layers of material to obtain a balance between reducing number of layers and increasing maximum sustainable pressure, if so desired.

The above example provides some guidance in some situations regarding selection of device and channel configurations. Thus, in some embodiments, a device based on LTCC materials supports operating pressures greater than about 34473 kPa (5,000 psi) for channel widths less than about 300 µm.

In some embodiments, corner radii, where present, are preferably greater than about 5 µm, more preferably greater than about 25 µm, and still more preferably greater than about 50 µm or greater, depending on desired ultimate operating pressure. A processing unit, in some embodiments, has a thickness that is in a range of about 3 to about 7 times a height of a separation column.

In some embodiments, fabrication steps support production of corners having desired radii magnitudes. Any suitable technique to produce a desired amount of rounding, including known techniques, is useable. For example, an embossing fixture having a desired degree of rounding of relatively sharp features is usable to define corner radii and/or selection of a level of pressure applied to a green-sheet stack may help to define corner radii.

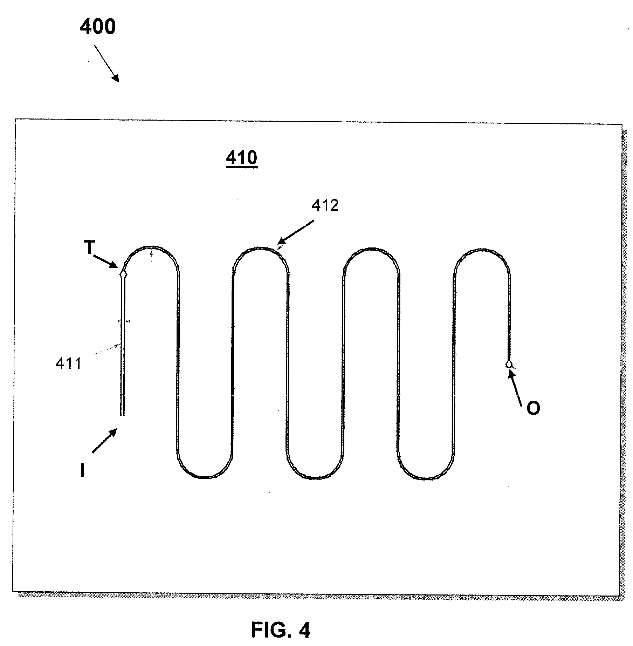

Next, some more detailed alternative illustrative embodiments of devices and fabrication methods which form not part of the present invention are described with reference to **FIGS. 4** through **11**.

**FIG. 4** is a top-view diagram of chemical-processing unit **400** which forms not part of the present invention. The unit **400** includes a ceramic-based substrate **410** that defines a trap column **411**, a separation column **412**, and fluidic ports **I**, **O**, **T** including a trap-column inlet port **I**, a separation column outlet port **O**, and a trap-column outlet port **T**. The trap-column inlet port **I** provides an inlet to the trap column **411** for fluid from, for example, an injector and a pump. The trap-column outlet port **T** provides an outlet for the trap column **411**. The separation-column outlet port **O** provides an output for an eluent exiting from the separation column **412**.

The chemical-processing unit **400** includes a three-layer LTCC substrate. The bottom layer is a blank layer, the middle layer includes the trap and separation columns, and the top layer has three via holes aligned with inlets and outlets of the trap column and the separation column, i.e., corresponding to the fluidic ports **I**, **O**, **T** of **FIG. 4**.

In this implementation, the separation column has a serpentine configuration and a length of approximately 10 cm and a width of approximately 100 µm. The trap column has a length of approximately 1 cm and a width of approximately 180 µm. Generally, a serpentine or other non-linear column configuration permits a size reduction of a ceramic substrate for a given column length relative to a substrate or tube defining a substantially linear column.

A high-pressure fluidic connector is sealed to the trap-column inlet port via, for example, glue or a clamping device. Similar connections are made to the separation column outlet port and to the trap-column outlet port (a trap-valve port.)

The separation column was slurry packed by attaching a fused-silica capillary to the outlet-port connector of the separation column; the capillary had a glass particle frit to trap column-packing particles as the slurry flowed through the separation column and out through the capillary. A dilution level of the packing slurry was empirically selected to provide good packing of the entire separation column. A separation column is optionally flushed and re-packed until a desired packing is obtained to, for example, obtain a desired chromatographic efficiency.

The chemical processing unit **400** is applicable, for example, to nano-scale HPLC with flow rates of less than 500 nL/min. As will be understood by one having ordinary skill in the chromatography arts, a large volume sample is loadable onto the trap column **411** at a flow rate of, for example, 5 - 20 uL/min. Once the sample has been loaded onto the trap column **411**, the trap valve is closed and the solvent gradient is initiated, eluting the sample off the trap column **411** onto the separation column **412** for analysis.

The unit **400** reduces the number of tubing connections found in some prior nano-scale systems. The unit **400**, in some alternatives, it used as a consumable due, in part, to its relatively low manufacturing cost.

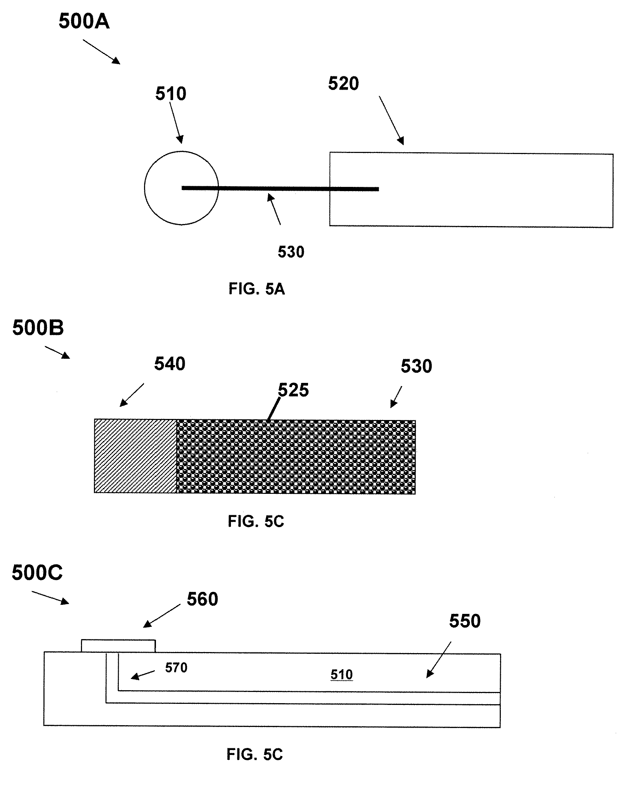

Referring next to **FIGS. 5a**, **5b**, **5c**, embodiments which form not part of the present invention entail methods for packing conduits in ceramic-based chromatographic devices. These embodiments include separation columns packed with, in some cases, spherical silica particles having diameters in a range of about 1-5 um. The silica material is optionally derivatized with a variety of functional moieties to vary retention behavior.

Some of these embodiments make use of frits or other features to assist trapping of particles in a conduit, such as one or more separation columns. As described below, temporary and/or permanent structures disposed internally and/or externally to a substrate are used to trap particles, in some embodiments.

Some prior column packing techniques are not well suited to some LTCC/HTCC-based nano- or capillary-scale chromatographic systems, according to some embodiments of the invention. For example, some prior high-temperature sintering and chemical bonding methods for frit creation require relatively easy access to the fritted area (i.e., to apply localized heating or deposition of chemical bonding agents.) Such easy access is not available in some embodiments.

**FIG. 5a** is a block diagram of a top view of a portion of a ceramic-based device **500a** at an intermediate stage of fabrication which forms not part of the present invention. The device **500a**, at the illustrated intermediate stage of fabrication, includes a separation column **520**, a via conduit **510** adjacent to the column **520**, and a conduit-defining component **530** disposed between an end of the column **520** and the via **510**. The conduit-defining component **530** includes a sacrificial/fugitive material such as carbon-containing material.

The conduit-defining component **530** is, for example, a fine carbon or polymer fiber (e.g., having a diameter of approximately 10 µm.) During firing, the fugitive material burns away (or otherwise gains mobility) leaving a relatively narrow conduit connecting the separation column to the via conduit. The narrow conduit serves as a frit for trapping particles in the column during a later stage of fabrication of the device. The dimensions of the conduit-defining component **530** are selected to define the desired dimensions of the conduit.

In an alternative, the conduit-defining component **530** is a paste, which is deposited, for example, via screen printing. The paste includes a sacrificial component and, optionally, includes additional materials. The additional materials include, for example, particles formed of a glassy material, a ceramic material, and/or a metallic material.

In an alternative, a narrow conduit is defined prior to lamination by, for example, removal of material or embossing, as described above.

Although particles with diameters of less than approximately 5 µm are preferred for some embodiments, in some cases particles are adequately trapped by a transition zone between two conduits having diameters both greater than 5 µm: for example, a transition from a 75-150 µm diameter separation column to a 10 µm diameter conduit.

**FIG. 5b** is a block diagram of a top view of a portion of a ceramic-based device **500b** which forms not part of the present invention. The device **500b** includes a separation column **525**, a porous plug **540** disposed in the column **525**, and packed particles **530** disposed in the column **525** adjacent to the plug **540**. The porous plug **540** acts as a frit during packing of the column **525**.

The porous plug **540** is fabricated via any suitable method, including known methods and methods described above. For example, the porous plug **540** originates from a paste deposited in one end of the separation column **525**. The paste optionally includes material that becomes fixed via sintering and/or a chemical-bonding process.

**FIG. 5c** is a block diagram of a side view of a portion of a ceramic-based device **500c** at an intermediate stage of fabrication which forms not part of the present invention. The device **500c** includes a substrate **510** defining a separation column **550** and a via conduit **570** connecting an end of the column **550** to an outlet port, and a frit **560** disposed to block the outlet port.

The frit **560** includes any suitable material, including known materials. For example the frit is formed of filter paper, for example, an oriented filter paper that permits fluid flow in substantially a single direction.

The frit **560** is permanently or removably attached to the substrate **510**. The frit is attached to the substrate **510** via any suitable mechanism. For example, the frit **560** is optionally glued and/or clipped to the substrate **510**.

After packing of the column **550**, the outlet port is optionally sealed with or without removal of the frit **560**. For example the port and/or frit **560** is optionally sealed with PDMS.

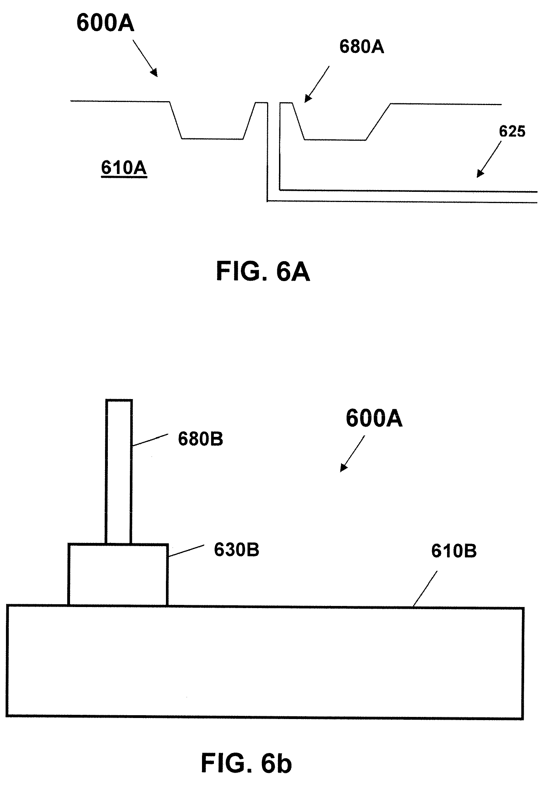

Next referring to **FIGS. 6a** and **6b**, embodiments which form not part of the present invention involve electrospray interfaces for mass spectrometry. Such interfaces are an integral part of a ceramic-based substrate or are attached to a ceramic-based substrate. Some of these embodiments include replaceable electrospray tips. Some embodiments include two or more tips, such as an array of tips.

**FIG. 6a** is a block diagram of a side view of a portion a ceramic-based device **600a** that incorporates an electrospray interface **680a** which forms not part of the present invention. The device **600a** includes a ceramic-based substrate **610a** that defines a separation column (not shown) and a conduit **625** connecting an exit of the separation column to the interface **680a**. The interface **680a** is an integrally formed portion of the substrate **610a**.

The interface **680a** is formed, for example, in an unfired layer(s) via any suitable technique, including known techniques. For example, a portion of unfired material is removed from around an outlet conduit to form a desired emitter-tip shape. The outlet conduit extends, for example, from an edge of the substrate **610a**, parallel to the plane of the substrate **610a**, or extends from a surface of the substrate **610a**, perpendicular to the plane of the substrate **610a**. Other embodiments have emitter tips that extend at non-parallel and non-perpendicular orientations. Unfired material is removed, for example, through use of an eximer laser and/or other methods described above.

**FIG. 6b** is a block diagram of a side view of a portion a ceramic-based device **600b** which forms not part of the present invention and that includes a processing-unit **610b**, an electrospray interface **680b**, and a connector **630b**. The electrospray interface **680b** is permanently attached or removably attached to the substrate **610b**. For example, a connector similar one described above with reference to **FIG. 2a** is usable to removably or permanently attach the interface **680b**. The interface **680b** is any suitable electrospray interface. For example, the interface **680b** optionally has a configuration that is similar to that of electrospray interfaces known to one having ordinary skill in the liquid-chromatography/mass-spectrometry interface arts.

Nano-scale HPLC components of embodiments of the invention are preferably coupled to a mass spectrometer. A typical mass spectrometer is a concentration-sensitive detection technique that typically improves in sensitivity when flows of less than approximately 10 µL/min are used. While UV and fluorescence detection are major detection methods for analytical and microbore-scale chromatography, it is typically difficult to construct an optical detection flow cell with a low enough volume to prevent band broadening at flow rates of less than approximately 1 µL/min.

The embodiments described above with respect to **FIGS. 6a** and **6b** are optionally used with the embodiment of **FIG. 2b**.

**FIG. 7** is a block diagram of a side view of a portion of a ceramic-based device **700** which forms not part of the present invention. The device **700** (similar to the embodiment illustrated in **FIG. 4**) includes a process-unit substrate **710** that defines a separation column and a trap column (not shown,) a fluidic via **730** leading to a vent port, and a channel **740** connecting the via **730** to the trap column. The device **700** also includes a trap valve **720** in communication with the outlet port of the fluidic via **730**.

The valve **720** includes a housing **721**, a compliant member **723** that is directly or indirectly mounted on the housing **721**, and an actuator **722** that is directly or indirectly mounted on the housing **721**. The housing **721** defines a fluidic channel having a vent port **750** and providing a pathway for a fluid flow entering and exiting the valve **720**. The valve **720** is disposed adjacent to the outlet of the fluidic via **730**.

The valve **720** has opened and closed states. In the closed state, the housing of the valve **720** or an optional component attached thereto blocks the outlet via port. For example, as illustrated, the valve **720** optionally includes a sealing component **724** that presses over and seals the outlet port when the valve **720** is in the closed state. When in the opened state, the compliant member **723** substantially prevent fluid from leaking away from the valve **720** rather than exiting, as desired, through the valve conduit.

In association with the variable valve state, the position of the housing **721** relative to the substrate **710** is adjustable in response to the actuator **722**. As illustrated, the valve **720** is in an opened state

The compliant member **723** preferably has an elastic property that permits it to recoverably deform and to provide a seal in spite of at least some particle(s) lodging between the compliant member **723** and the substrate **710**.

The compliant member **723** has a circular configuration. In alternative embodiments, a compliant member has alternative configurations, for example, square, rectangular, or a more general shape. Moreover, a compliant member may include two or more component parts. As will be understood by one of ordinary skill, a compliant member may be, for example, an O-ring or a gasket.

At least a portion of the compliant member **723** includes a suitable compliant material(s), including, for example, a known compliant material. For example, an O-ring is suitably made from, for example, nitrile, silicone, fluorocarbon, fluorosilicone, ethylene propylene, neoprene, or polyurethane. In some embodiments, a compliant material is chosen for biocompatibility.

The sealing component **724** is formed of any material that suitably provides a fluidic seal when in contact with the via outlet port. The material is optionally chosen for biocompatibility and/or high-pressure performance. The sealing component, for example, provides a substantially leak-free seal at pressures up to about 6894 kPa (1 kpsi), to about 13789 kPa (2 kpsi), to about 68947 kPa (10 kpsi), to about 103421 (15 kpsi), or higher.

The actuator **722** has any suitable configuration that permits controllable positioning of the housing **721** relative to the substrate **720**. For the example, the actuator **722** optionally includes a piezo-electric material whose thickness varies via application of an electrical voltage. A piezo-electric actuator includes any suitable piezo-electric materials, including known materials.

Thus, in one example, expansion of a piezo-electric actuator leads to blocking of the outlet port, creating a high-pressure seal. Contraction of the piezo-electric actuator opens the high-pressure seal, allowing fluid to flow out of the port and through the valve conduit. A relatively low-pressure compliant member **723** ensures that fluid exiting the via port is directed out of a vent port of the valve **720**.

The trap valve **720** controls diversion of flow to waste, thus enabling samples to be loaded onto the trap column at high flow rates. When the trap valve **720** is closed, flow is directed through the separation column.

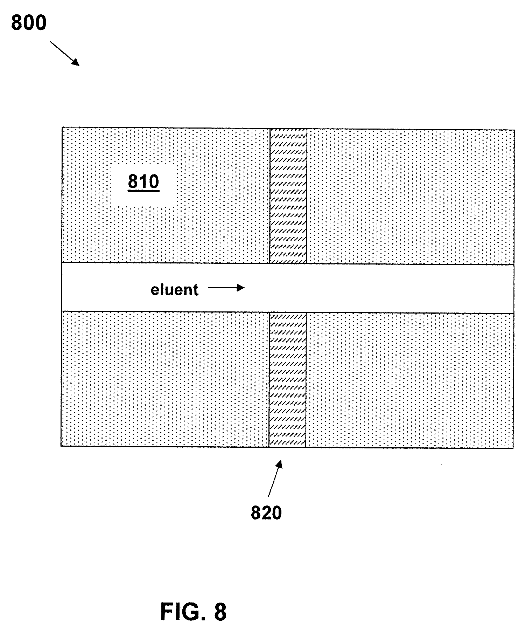

**FIG. 8** is a top view of a diagram of a portion of a ceramic-based chromatographic device **800** which forms not part of the present invention. The device **800** includes a substrate **810**, which defines a fluidic channel, and a waveguide **820**. The waveguide **820** supports light-based analyses of fluid flowing through the channel, as will be understood by one having ordinary skill in the chromatography arts.

At least portions of the waveguide **820** are disposed in the substrate **810**. The waveguide **820** includes any suitable material. The waveguide **820** includes, for example, optical fibers. The channel is formable by any of the above-described techniques.

During fabrication, waveguide material, such as an optical fiber, is disposed between layers of the substrate **810**. As an alternative, for example, waveguide channels are formed in a green sheet and then filled with a material having a suitable index of refraction. A suitable index of refraction is, for example, greater than an index of refraction of the surrounding material.

The waveguide **820**, in some embodiments, is defined by exposing a light-sensitive material to a pattern of light. For example, light is used to selectively polymerize monomers in a light-sensitive material, so that the resulting photopolymerized regions have an index of refraction that is higher than the surrounding regions. In this way, a pattern of light can be used to define an optical waveguide pattern in polymeric, i.e., plastic materials. Such waveguide-forming materials include, for example, acrylate and methacrylate monomers in a polymer binder and optionally include initiators and other constituents. Some waveguide-forming materials are commercially available from Polymer Photonics, Inc., Kennett Square, PA.

The device **800** optionally includes light emitters and/or light detectors located in, on and/or off of the substrate **810**. A detector includes, for example, a multichannel detector, such as a charge-coupled device (CCD) or a photodiode array. The waveguide **820** thus supports, for example, light absorption and/or emission spectroscopy, as will be understood by one having ordinary skill in the chromatographic arts. In one alternative, excitation radiation is applied to the channel via one section of the waveguide **820** and fluorescence radiation is received by another section of the waveguide **820**.

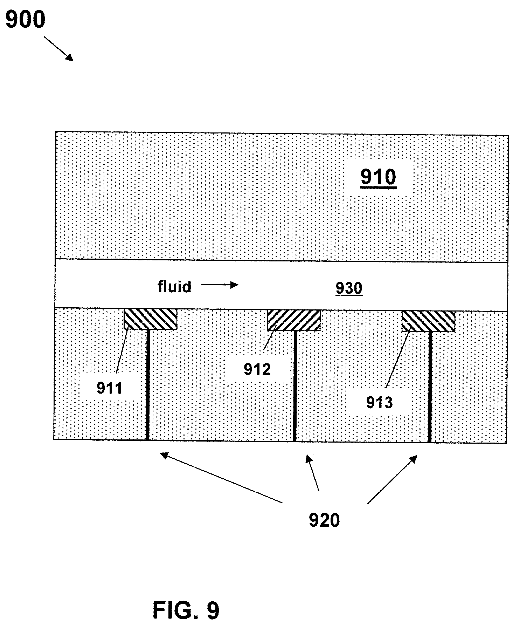

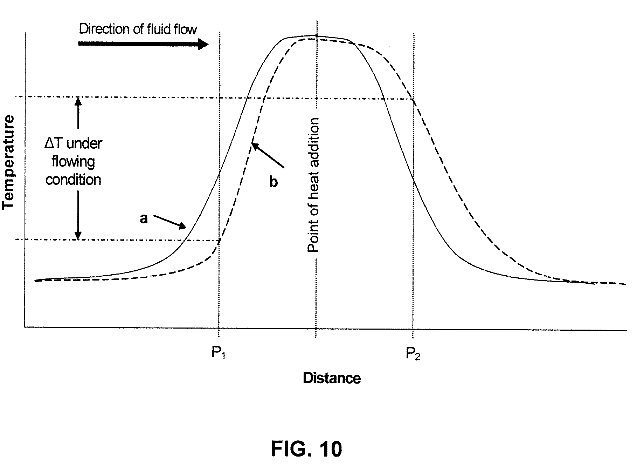

Next referring to **FIGS. 9** and **10**, flow-control features which form not part of the present invention are described.

**FIG. 9** is a top view of a diagram of a portion of a ceramic-based device **900** which forms not part of the present invention. The device **900** includes a substrate **910**, which defines a fluidic channel **930**, flow-sensor components **911**, **912**, **913** of a thermal-based flow sensor, and electrical interconnect **920** providing electrically conductive paths to the components **911**, **912**, **913**. The thermal-based flow sensor provides suitably accurate measures of flow rates less than 20 µL/min. The flow sensor measures the flow delivered by one or more pumps and the pump is responsively controlled in a manner to obtain a desired flow rate.

As an example, the device **900** supports nano-scale chromatography, i.e., with flow rates, for example, of less than approximately 5 µL/min. Some typical reciprocating-plunger pumping technology used in available analytical systems are not reliable at such low flow rates. Normal seal and check-valve leakage and compression of the fluid during pressurization are typically insignificant in normal-scale HPLC, though cause significant flow errors at nano-scale flow rates. The thermal-based flow sensor supports correction of such errors.

The component **912** includes a heat generator, while the other two components **911**, **913** include temperature sensors, which are optionally any suitable temperature sensors. Any of the components are in contact with a fluid in the channel **930** or separated by a ceramic portion of the substrate **910** and/or separated by some additional material, for example, a low thermal conductivity material, such as a glass or a polymer.

The heat generator includes, for example, any suitable known resistive material that increases in temperature in response to an electrical current flowing through the material.

The thermal-based flow sensor operates, for example, as illustrate by **FIG. 10**. **FIG. 10** is a graph of temperature of a fluid in a conduit as a function of position in the conduit. A discrete thermal plug is introduced into the fluid at the indicated position. The introduced heat disperses in both the upstream and downstream directions (i.e. due to fluid movement and/or thermal diffusion.)

If a discrete section of a non-moving fluid in the channel is continuously heated, a temperature profile similar to curve a in **FIG. 10** develops. The shape of this temperature profile will depend upon the amount of heat added to the fluid and the upstream and downstream temperatures of the fluid.

Assuming identical upstream and downstream fluid temperatures, under this zero-flow condition, fluid temperatures measured at **P1** and **P2** will be equal because thermal diffusion is equal in both directions. If the fluid in the channel is permitted to flow, the fluid temperatures at **P1** and **P2** will now also depend upon the rate of fluid flux and the resulting heat convection. As fluid begins to flow past the heated zone, a temperature profile similar to curve **b** in **FIG. 10** develops because, in addition to the symmetrical diffusion of the heat, asymmetrical convection of the heated fluid occurs in the direction of the fluid flow. Therefore, under flowing conditions, fluid temperatures measured at **P1** and **P2** are different.

Temperature measurements made at **P1** and **P2** are sampled and, for example, subtracted and amplified electronically in situ to allow a high degree of common-mode noise rejection, which allows discrimination of extremely small upstream and downstream temperature differences. In addition, by appropriate placement of the temperature sensors, which measures temperatures at **P1** and **P2**, and/or changing the amount of heat added to the flowing fluid, temperature measurements can be made at inflection points along the temperature profile to maximize the upstream/downstream ΔT response to flow rate change.

An alternative or complementary flow control mechanism entails a variable fluidic-resistance element in series with a pump and a flow sensor. A thermally-controlled variable restriction element (TCVRE) may be implemented via heating/cooling using a Peltier element, for example.

Embodiments which form not part of the present invention, as indicated above, include electronic devices, such as resistors, embedded in a multilayer device. Resistors, for example, are employable in microfluidic channels as heater elements and/or temperature sensors, as usable in, for example, some flow sensors. Thermally-sensitive thick-film resistive elements that are commercially available for electronic LTCC applications, for example, are suitable for use in some embodiments of the invention.

Embodiments which form not part of the present invention include pre- and/or post-column split-flow control features using ceramic-based flow sensors and/or thermally-controlled variable restrictors. Some embodiments include a pressure sensor based on a piezoresistive material. A suitable co-fireable piezoresistive paste is, for example, 3414 series paste (available from Electro-Science Lab, King of Prussia, PA.)

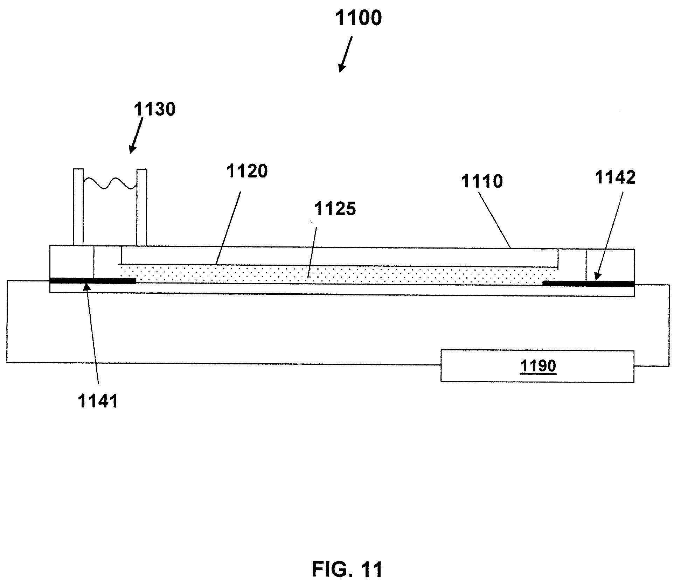

Next referring to **FIG. 11**, embodiments which form not part of the present invention include an electrokinetic (EK) pump formed from ceramic materials, such as the above-described LTCC and/or HTCC materials. Embodiments which form not part of the present invention include external EK pump(s) and/or integral EK pump(s) formed in a ceramic substrate. Some embodiments include an integrated EK-based LTCC/HTCC HPLC system (e.g. pump, flow controller, injector, and column.) In some embodiments, an EK pump is produced by forming and packing a channel in similar manner to those described above, with particles or monoliths appropriate to EK functioning.

**FIG. 11** is a cross-sectional diagram of an EK pump **1100** formed in a ceramic substrate and which forms not part of the present invention. The pump **1100** includes a substrate **1110** defining a channel **1120**, a porous pumping medium **1125** in the channel **1110**, electrodes **1141**, **1142** in electrical contact with either end of the porous pumping medium **1125**, a power supply **1190** connected to the electrodes **1141**, **1142**, and a fluid reservoir **1120** adjacent to an inlet port of the channel **1120**. The pump **1100** provides pressures of greater than 6894 kPa (1 kpsi) or greater than 13789 kPa (2 kpsi) or greater than 34473 kPa (5 kpsi) or greater than 68947 kPa (10 kpsi) or greater, as desired. The pressure is controllable in response to a voltage and/or current applied by the power supply **1190**.

The electrodes **1141**, **1142** and/or the porous pumping medium **1125** are optionally formed though use of, for example, the above-described thick-film techniques. The electrodes **1141**, **1142** are optionally solid or porous, as desired, for example, depending on disposition relative to the porous material **1125**.

Any suitable materials, including known materials, are used for thick-film processing of the electrodes **1141**, **1142** and the porous pumping medium **1125**. Platinum thick-films, for example, are suitable to form electrodes, or porous platinum thick films cast in channels are optionally used as high-capacity flow-through electrodes. A non-porous ion-transport medium, such as NAFION® sulfonated tetrafluorethylene copolymer (available from DuPont Wilmington, Delaware,) is optionally used, for example, via casting in channels to create fluid-impervious, gas-free electrode systems. See, for example, US Patent Publication 2005/0254967 to Evans and US Patent 7,094,326 to Crocker.

The porous pumping medium **1125** is charged via the power supply to generate pressure and flow via electroosmosis. The porous material **1125** is formed in any suitable manner. For example, some suitable materials include LTCC materials known from fuel-cell use, such as porous ceramic-based electrodes.

The power supply **1190** is any suitable power supply, including known supplies, that provides voltage and/or current control to control flow rate and/or pressure. An apparatus, according to some principles and which forms not part of the present invention, optionally includes both EK pump(s) and flow control components. For example, an apparatus includes on-substrate flow-control electronics such as thick-film metallization to support soldering of electronic components to provide analog and/or digital controller circuitry. Alternatively, flow-control electronics are included separately from a ceramic-based substrate.

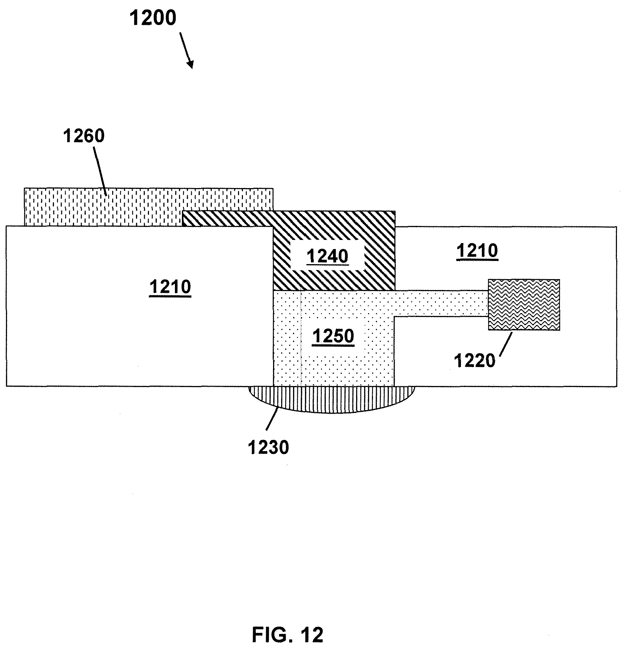

Some EK pumps which form not part of the present invention, utilize a gas-free electrode(s), for example, a known gas-free electrode, which is substantially free of bubble generation that potentially interferes with the flow of a fluid. For example, **FIG. 12** is a cross-sectional end-view diagram of an EK ceramic-based pumping apparatus **1200** that utilizes a gas-free isolated electrode system and which forms not part of the present invention. The apparatus **1200** includes a ceramic-based substrate **1210**, a porous electrode **1240** (also referred to herein as a gas diffusion electrode) formed in a via in the substrate **1210**, a conductor connection **1260** in contact with the porous electrode **1240**, a porous pump material in an EK-pump channel **1220** defined in the substrate **1210**, a non-porous dielectric material **1250** in a channel in the substrate **1210** and in contact with the porous pump material **1220**, and an optional non-porous plug **1230** to cap the exposed dielectric material **1250**.

The apparatus **1200** is fabricated in any suitable manner. For example, an LTCC or HTCC-based green structure is formed with cavities to accommodate the EK pump channel **1220**, the porous pumping medium **1125**, and the dielectric material **1250**.

Prior to firing, a via, defined to contain portions of both the electrode **1240** and the dielectric material **1250**, is partially filled with a porous Pt electrode thick-film material (to form the electrode **1240** by sintering); similarly, a surface thick-film conductor trace (to form the conductor connection **1260**) is deposited in contact with the porous Pt via fill.

After firing, the remaining unfilled portion of the via and a channel leading from the via to the EK pump channel **1220** is filled with a non-porous dielectric material such as sulfonated tetrafluorethylene copolymer. Optionally, the exposed dielectric material **1250** is capped. For example, a low curing temperature non-porous plug **1230** (i.e., a typical 2-part epoxy adhesive) is used to cap the exposed via **1250** to prevent extrusion or contamination of the non-porous dielectric material **1250**.

The above-described electrode system allows ion transport between the dry conductor **1260** connected to the high-voltage power supply and the pumping fluid while preventing fluid transport between the high-pressure EK pumping fluid and the ambient-pressure exterior of the substrate **1210**.

In view of the above description, one of ordinary skill will recognize that some embodiments of EK pumps are optionally configured as pressure sources. Some of these embodiments include a flow sensor and a flow-feedback control system; some of these embodiments provide a suitable flow source.

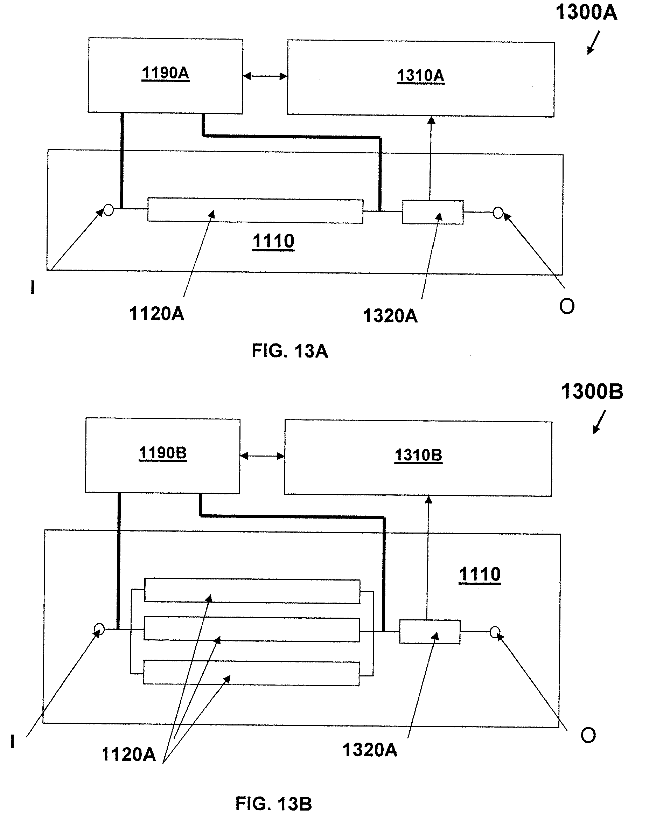

**FIG. 13A** is a top view block diagram of a ceramic-based EK pumping flow source **1300A** which forms not part of the present invention. The source **1300A** includes a ceramic-based substrate **1110A**, an EK pump component **1120A** in the substrate **1110A**, a pump inlet I and a pump outlet **O** defined in the substrate **1110A** and in fluid communication with first and second ends of the pump **1120A**, a flow sensor **1320A** disposed between the second end of the pump **1120A** and the outlet **O**, a power supply **1190A** in electrical communication with a pumping medium of the component **1120A**, and a flow control system **1310A** in communication with the flow sensor **1320A** and the power supply **1190A**.

The inlet I is connected to a fluid reservoir. This reservoir is fabricated, for example, as a cavity inside the source **1300A**, mounted onto the source **1300A**, or as a satellite reservoir connected to the source **1300A** via a fluid conduit.

Fluid exiting the pump component **1120A** flows through the flow sensor **1320A** co-fabricated as part of the source **1300A**. The flow control system **1310A**, implemented, for example, either on the substrate **1110A** utilizing standard multi-layer circuit board fabrication implemented with ceramic materials, or off of the substrate **1110A**, receives flow information from the flow sensor **1320A** and adjusts either the current or voltage of the high-voltage EK pump power supply **1190A** to achieve, for example, a selected flow set point.

Alternatives which form not part of the present invention include, for example, more than one EK pump. For example, **FIG. 13B** illustrates a system similar to that depicted in **FIG**. 13A, though employing multiple EK pumping channels to achieve higher flow rates.

**FIG. 13B** is a top view block diagram of a ceramic-based EK pumping flow source **1300B** which forms not part of the present invention. The source **1300B** includes a ceramic-based substrate **1110B**, three EK pump components **1120B** in the substrate **1110B**, a pump inlet I and a pump outlet O defined in the substrate **1110B** and in fluid communication with first and second ends of the pumps **1120B**, a flow sensor **1320B** disposed between the second end of the pumps **1120B** and the outlet **O**, a power supply **1190B** in electrical communication with a pumping medium of the components **1120B**, and a flow control system **1310B** in communication with the flow sensor **1320B** and the power supply **1190B**.

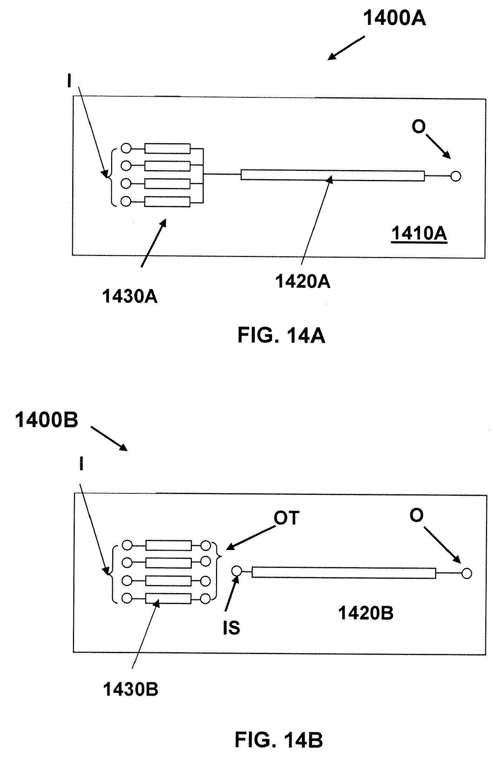

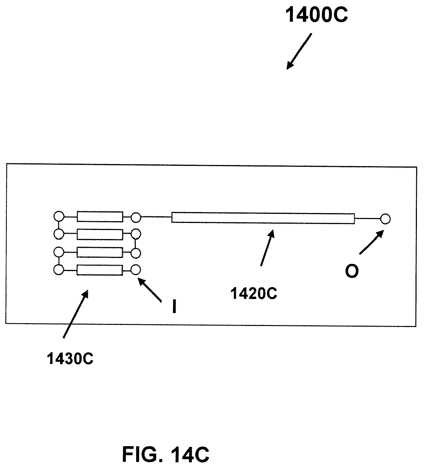

Next referring to **FIGS. 14A, 14B** and **14C**, illustrative embodiments which form not part of the present invention and that include multiple trap columns are described. Use of more than one trap column in some instances is advantageous. For example, some embodiments, of a nano-scale ceramic-based consumable device which form not part of the present invention include more than one trap column to mitigate failure due to sample contamination occurring in a fluidic pathway preceding a separation column.

Some consumable ceramic-based devices of the invention provide extended use of a separation column by the inclusion of multiple trap columns. Accordingly, a nano-scale LC consumable optionally includes multiple trap columns that are individually fluidically addressed using external valving or on-substrate port selection.

**FIG. 14A** is a top view block diagram of a ceramic-based liquid-processing apparatus **1400A** which forms not part of the present invention. The apparatus **1400A** includes a ceramic-based substrate **1410A**, multiple trap columns **1430A** in the substrate **1410A**, inlet ports **I** for each trap column **1430A**, a separation column **1420A** in the substrate **1410A** and in fluidic communication at an inlet end with outlet ends of the trap columns **1430A** and at an outlet end with an outlet port **O** defined in the substrate **1410A**. The apparatus **1400A** thus provides multiple trap columns having separate inlet vias, but all connected at a common junction with, for example, an analytical column(s).

Any one of the multiple trap columns **1430A** is addressable by moving an inlet interface to the inlet port **I** of the column **1430A** while plugging the inlet ports I of the remaining trap columns **1430A**.

Alternatively, for example, multiple trap columns with independent inlet and outlet vias are constructed on a single chip, and external valving or on-substrate valves and fluidic interfaces are used to connect an HPLC injector to a selected trap inlet as well as connect the selected trap outlet to an analytical column inlet. For example, **FIG. 14B** is a top view block diagram of a ceramic-based liquid-processing apparatus **1400B**. The apparatus **1400B** includes a ceramic-based substrate **141BA**, multiple trap columns **1430B** in the substrate **1410B**, inlet ports **I** and outlet ports OT for each trap column **1430B**, a separation column **1420B** in the substrate **1410B** and in fluidic communication at an inlet port **IS** and an outlet port **O** defined in the substrate **1410B**.

Embodiments which form not part of the present invention entail nano-scale LC consumables with multiple trap columns having different stationary phases. A consumable with multiple trap columns with different stationary phases is usable, for example, for multidimensional separations such as ion-exchange/reverse-phase separation systems commonly used for, for example, complex peptide separations. Alternatively two serially connected trap columns are useable, for example, to digest a whole-protein sample using an immobilized enzyme such as trypsin in a first trap column, followed by a reverse-phase trap column to collect the peptides produced in the trypsin column.

For example, **FIG. 14C** is a top view block diagram of a ceramic-based liquid-processing apparatus **1400C** which forms not part of the present invention. The apparatus **1400C** includes a ceramic-based substrate **1410C**, multiple trap columns **1430C** connected in serial fashion in the substrate **1410B**, an inlet port I for the first one of the trap columns **1430C**, a separation column **1420C** in the substrate **1410C** and in fluidic communication with an outlet of the trap columns **1430C** and having an outlet port **O** defined in the substrate **1410C**.

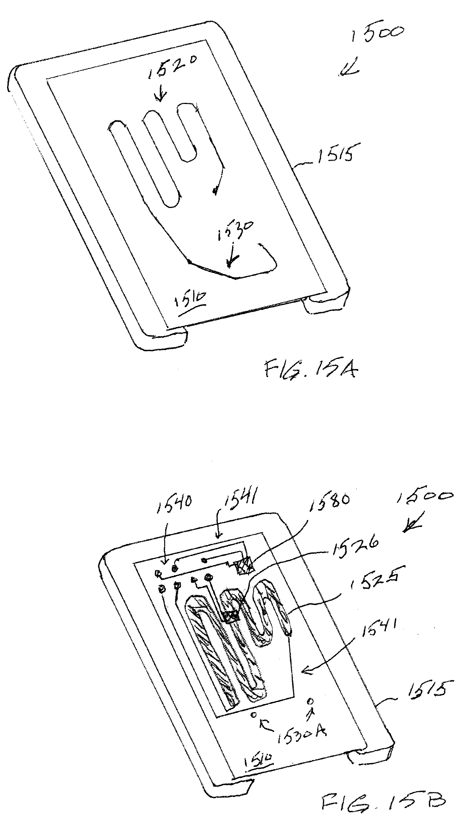

Referring next to **FIGS. 15A** and **15B**, embodiments which form not part of the present invention incorporate electronic component(s) with a microfluidic ceramic-based substrate. Similar processing steps to those described above are optionally utilized to, for example, incorporate electronic circuits such as multilayered electronic circuits in ceramic-based apparatus. For example, Embodiments which form not part of the present invention utilize co-fired metallization to integrate electronic elements with a ceramic-based substrate of a microfluidic system.

In embodiments which form not part of the present invention a system includes on-substrate temperature control components including integrated resistance elements for temperature sensing and heating. Some alternative embodiments attach electronic component(s) (integrated circuits and/or passive components) onto the microfluidic co-fired substrate using printed circuit-like thick film systems to solder or otherwise attach electronic components.

Alternatively, some electronic components interact with on-substrate analog or digital devices (as flow or temperature sensors, heaters, and detection systems) via an a substrate interface such as contact pads. As one alternative, signal processing and consolidation of multiple on-substrate sensor and control systems in an analog or digital fashion provides a single analog or digital interface between the substrate and an external control system or user interface. Still other alternative embodiments include on-substrate electronic data storage components, such as an EEPROM or other re-writeable or permanent memory systems used, for example, to serialize devices, store usage history, or provide calibration information, factory test data, or usage methods. Host systems that interface with a consumable substrate optionally read or write data to on- substrate data storage units.

For example, **FIG. 15A** and **FIG. 15B** illustrate a three-dimensional view of a ceramic-based device **1500** which forms not part of the present invention. Microfluidic components associated with a patterned layer of a substrate are shown in **FIG. 15A** and electronic components associated with a surface of the substrate are shown in **FIG. 15B**. The device **1500** includes a ceramic-based substrate **1510** that defines an analytical column **1520** and a trap column **1530** in communication with the analytical column **1520**, an integrated heater **1525** disposed adjacent to the analytical column **1520**, a temperature sensor **1526** disposed adjacent to a midsection of the heater **1525**, an EEPROM data storage component **1580** attached to the substrate **1510**, electrical interconnect **1541** variously connected to the heater **1525**, sensor **1526**, and component **1580**, contact pads **1540** to provide an electrical interface for a host system to the interconnect **1541**, and a frame **1515** that supports the substrate **1510**.

The device **1500** is removably attached to a host LC or LC/MS system via a clamping device, which is any suitable clamping device; a suitable clamping device, for example, is similar to the clamp described with reference to **FIG. 2B**. The device 1500 communicates electrically with the host system via the contact pads 1540 and communicates fluidicly with the host via fluidic ports **1530A** defined in the substrate **1520**. Thus, when attached to a host system, the device **1500** receives electrical power and liquids from the host system, and communicates electronically with the host system.

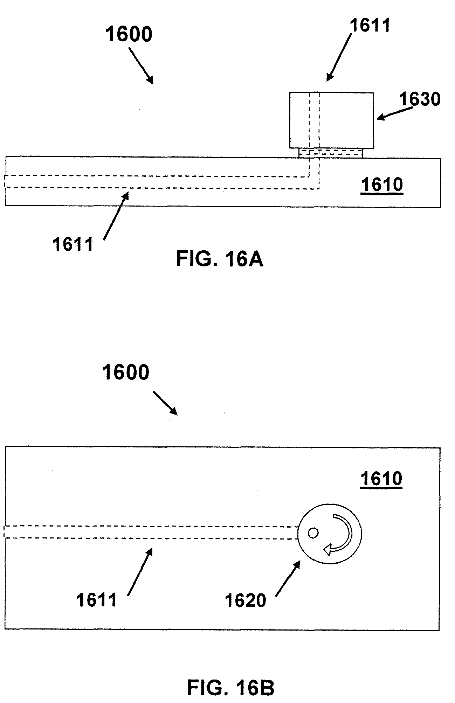

Next referring to **FIG. 16A** and **FIG. 16B**, embodiments of a ceramic-based microfluidic substrate which form not part of the present invention include multiple inlet and outlet ports, associated with various channels defined by the substrate, that require addressing for desired fluidic communication with a host system. A high-pressure fluidic interface for selective fluidic connections to such ports is obtained, for example, though use of a rotary or linear multi-port valve component.

For a broadly illustrative example, **FIG. 16A** is a side view block diagram and **FIG. 16B** is a top view block diagram of a portion of a valve portion **1600** of a ceramic-based microfluidic system which forms not part of the present invention. The valve portion **1600** includes a substrate **1610** defining a conduit **1611**, a stator **1630** mounted adjacent to the substrate **1610**, and a rotor **1620** disposed between the stator **1630** and the substrate **1610**. The stator **1630** defines a fluidic via **1631** to connect with external fluidic components, and is in alignment with a port of the conduit **1611**. The rotor **1620** defines an aperture that corresponds in diameter to the diameter of the fluidic via **1631** of the rotor **1620**. The rotor **1620** is rotatably movable to either block or open a path between the fluidic via **1631** and the port of the conduit **1611** by appropriately positioning the aperture of the rotor **1620**. The arrow indicates an angular direction of rotation of the rotor **1620**.

In order to create a high-pressure fluidic seal, either the stator **1630**, rotor **1620** or both are preferably made of a suitable compliant material. One suitable material is a polyether-ether-ketone, such as PEEK polymer (available from Victrex PLC, Lancashire, United Kingdom.) The stator **1630** and rotor **1620** are held together with enough force to maintain a substantially leak-free path while still permitting rotation of the parts against each other. In order to achieve high valve lifetimes (i.e. multiple actuations), compliant and hardened materials for the stator **1630** and rotor **1620** with sufficient stiffness and low friction are optionally used to decrease surface wear.

Some commercially available HPLC multi-port high-pressure valves such as a CHEMINERT® valve, available from Valco Instruments Co. Inc are suitable. These valves typically use a stator having multiple ports arranged in an arc that can be made to align with features on a rotor by rotating either part with respect to the other.

A valve is coupled to an LTCC microfluidic substrate in a variety of suitable ways. Because the ceramic substrate is typically hard, a compliant rotor is suitable for rotating and sealing against the substrate. The rotor has features that align with ports on the substrate upon rotation. For example, a single port on a rotor is alternately aligned with one of several ports on a LTCC device, blocking the other ports that are not aligned. Alternatively, a groove on a rotor fluidically connects two ports on a LTCC device or blocks one or both ports. Similarly, a groove in a rotor alternately connects two of three ports arranged in an arc. A variety of fluidic interfaces, related to those described here, are optionally used to address one of multiple trap columns on a LTCC-based nano-scale LC consumable device.

One having ordinary skill in the liquid chromatography arts will recognize that valves are optionally include to provide a variety of functions (such as flow switching, sample injection, and stream selection), and are attachable to a substrate in any suitable manner. For example, valves are attachable via the techniques described above with reference to the connectors **130**, **230A**.

Various illustrative implementations of the present invention may be applied to a variety of systems and/or methods involving fluid transport. As used herein, the terms "fluid", "fluidic" and/or any contextual, variational or combinative referent thereof, are generally intended to include anything that may be regarded as at least being susceptible to characterization as generally referring to a gas, a liquid, a plasma and/or any matter, substance or combination of compounds substantially not in a solid or otherwise effectively immobile condensed phase. The terms "inlet" and "outlet" are generally understood to refer to any cross-sectional area or component feature of a device, the flux through which tends to translate fluid from a volume element substantially external/internal to a device to a volume element substantially internal/external to the device.

## Claims

1. A chemical-processing instrument (100, 200a) for performing high-performance liquid chromatography, comprising:
a processing unit (110, 210a), a high pressure pump (120), a tube (140) receiving a fluid from the high-pressure pump (120), and a high-pressure connector (130, 230a) attaching the tube (140) to the processing unit (110, 210a);
the processing unit (110, 210a) being provided by a substantially monolithic multilayered structure derived from a sintered laminated multilayered green-sheet structure comprising a first layer (110a) and one or more additional layers (110b, 110 c, 110 d, 110 e), with each of said layers being derived from a ceramic-based green-sheet tape including ceramic particles dispersed in an organic binder,
the processing unit (110, 210a) defining a separation column (A) in fluidic communication with an inlet port of the processing unit (110, 210a), the separation column (A) and other conduits (B, C, D) being defined by the processing unit (110, 210a), and extending fully or partially through the thickness of said layers (110a, 110b, 110c, 110d, 110e);
the high-pressure pump (120) configured to deliver the fluid comprising a solvent at a pressure sufficient for high-performance liquid chromatography; and
the high-pressure connector (130, 230a) being in physical communication with the inlet port, and configured to provide a substantially leak-free connection for the tube (140) receiving the fluid delivered by the high-pressure pump (120).

2. The instrument of claim 1, wherein the separation column (A) has a width of less than 500 µm.

3. The instrument of claim 1, wherein the separation column (A) has a width of less than 200 µm.

4. The instrument of claim 1, wherein the pressure is greater than 34473 mPa.

## Patentansprüche

1. Chemikalien verarbeitendes Instrument (100, 200a) zum Durchführen von Hochleistungsflüssigchromatographie, umfassend:
eine Verarbeitungseinheit (110, 210a), eine Hochdruckpumpe (120), ein Rohr (140), das ein Fluid von der Hochdruckpumpe (120) empfängt, und einen Hochdruckanschluss (130, 230a), der das Rohr (140) mit der Verarbeitungseinheit (110, 210a) verbindet;
wobei die Verarbeitungseinheit (110, 210a) durch eine im Wesentlichen monolithische mehrschichtige Struktur bereitgestellt ist, die aus einer gesinterten laminierten mehrschichtigen Grünfolienstruktur erlangt wird und die eine erste Schicht (110a) und eine oder mehrere zusätzliche Schichten (110b, 110c, 110d, 110e ) umfasst, wobei jede der Schichten aus einem keramikbasierten Grünfolienband, das Keramikteilchen enthält, die in einem organischen Bindemittel dispergiert sind, erlangt wird,
wobei die Verarbeitungseinheit (110, 210a) eine Trennsäule (A) in Fluidverbindung mit einer Einlassöffnung der Verarbeitungseinheit (110, 210a) definiert, wobei die Trennsäule (A) und andere Leitungen (B, C, D) durch die Verarbeitungseinheit (110, 210a) definiert sind, und sich vollständig oder teilweise durch die Dicke der Schichten (110a, 110b, 110c, 110d, 110e) erstreckt;
wobei die Hochdruckpumpe (120) derart hergerichtet ist, dass das ein Lösungsmittel enthaltende Fluid mit einem für die Hochleistungsflüssigchromatographie ausreichenden Druck zu fördern; und
wobei der Hochdruckanschluss (130, 230a) in Wirkverbindung mit dem Einlassanschluss steht und hergerichtet ist, um eine im Wesentlichen leckfreie Verbindung für das Rohr (140) bereitzustellen, das das von der Hochdruckpumpe (120) geförderte Fluid empfängt.

2. Instrument nach Anspruch 1, wobei die Trennsäule (A) eine Breite von weniger als 500 µm aufweist.

3. Instrument nach Anspruch 1, wobei die Trennsäule (A) eine Breite von weniger als 200 µm aufweist.

4. Instrument nach Anspruch 1, wobei der Druck größer als 34473 mPa ist.

## Revendications

1. Instrument de traitement chimique (100, 200a) pour réaliser une chromatographie liquide à haute performance, comprenant :
un dispositif de traitement (110, 210a), une pompe à haute pression (120), un tube (140) recevant un fluide depuis la pompe à haute pression (120) et un raccord à haute pression (130, 230a) reliant le tube (140) au dispositif de traitement (110, 210a),
ledit dispositif de traitement (110, 210a) étant constitué d'une structure multicouches essentiellement monolithique obtenue à partir d'une structure de feuille non cuite multicouches frittée, stratifiée comprenant une première couche (110a) et une ou plusieurs couches supplémentaires (110b, 110c, 110d, 110e), chacune des couches étant obtenue à partir d'une bande de feuille non cuite à base de céramique incluant des particules de céramique dispersées dans un liant organique,
ledit dispositif de traitement (110, 210a) définissant une colonne de séparation (A) en communication fluidique avec un orifice d'entrée du dispositif de traitement (110, 210a), la colonne de séparation (A) et les autres conduits (B, C, D) étant définis par le dispositif de traitement (110, 210A) et s'étendant entièrement ou en partie à travers l'épaisseur des dites couches (110a, 110b, 110c, 110d, 110e),
ladite pompe à haute pression (120) étant conçue pour distribuer le fluide comprenant un solvant à une pression suffisante pour une chromatographie liquide à haute performance, et
ledit raccord à haute pression (130, 230a) étant en communication physique avec l'orifice d'entrée, et étant conçu pour fournir un raccordement essentiellement étanche pour le tube (140) recevant le fluide distribué par la pompe à haute pression (120).

2. Instrument selon la revendication 1, dans lequel la colonne de séparation (A) a une largeur inférieure à 500 µm.

3. Instrument selon la revendication 1, dans lequel la colonne de séparation (A) a une largeur inférieure à 200 µm.

4. Instrument selon la revendication 1, dans lequel la pression est supérieure à 34473 mPa.
